(19) Europäisches Patentamt
European Patent Office
Office européen des brevets

(11) Veröffentlichungsnummer: **0 040 758**
**B1**

(12) **EUROPÄISCHE PATENTSCHRIFT**

(45) Veröffentlichungstag der Patentschrift: **08.08.84**

(51) Int. Cl.³: **C 08 L 51/00**, H 01 M 2/16

(21) Anmeldenummer: **81103682.1**

(22) Anmeldetag: **13.05.81**

(54) **Sinterfähige, feinteilige Polyvinylchlorid-Formmasse sowie Verfahren zu deren Herstellung und deren Verwendung.**

(30) Priorität: **17.05.80 DE 3018922**

(43) Veröffentlichungstag der Anmeldung:
**02.12.81 Patentblatt 81/48**

(45) Bekanntmachung des Hinweises auf die Patenterteilung:
**08.08.84 Patentblatt 84/32**

(84) Benannte Vertragsstaaten:
**AT BE DE FR GB IT NL SE**

(56) Entgegenhaltungen:
**CH - A - 451 523**
**DE - A - 2 310 431**
**DE - A - 2 646 595**

(73) Patentinhaber: **HOECHST AKTIENGESELLSCHAFT, Postfach 80 03 20, D-6230 Frankfurt am Main 80 (DE)**

(72) Erfinder: **Kraus, Helmut, Dr., Donaustrasse 32B, D-8266 Töging/Inn (DE)**
Erfinder: **Weinlich, Jürgen, Dr., Eichenweg 1, D-6239 Eppstein/Taunus (DE)**
Erfinder: **Plewan, Otto, Bischof-Sailer-Strasse 15, D-8262 Neuötting (DE)**

**EP 0 040 758 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Formmasse aus sinterfähigem, durch Pfropf-Copolymerisation in wäßriger Suspension hergestelltem Polymerem, das überwiegend polymerisierte Vinylchlorid-Einheiten enthält, ein Verfahren zu deren Herstellung und deren Verwendung zur Herstellung von Separatorplatten für elektrische Zellen.

Es ist bekannt, Polyvinylchlorid zur Herstellung von Separatorplatten für elektrische Zellen einzusetzen. Zunächst wurde versucht, nach den üblichen Verfahren der Suspensions-Polymerisation von Vinylchlorid hergestellte Produkte zu verwenden. Solche Polymerisate haben jedoch in der Regel eine zu hohe mittlere Teilchengröße, was zu sehr grobporigen Sinterplatten führt. Aber selbst ein feinteiliges Suspensions-Polyvinylchlorid hat noch den Nachteil einer schlechten Benetzbarkeit, die den Durchgang des Elektrolyten durch die Separatorplatte behindert.

Zur Vermeidung dieser Schwierigkeit ist es bekannt, die Suspensions-Polymerisation von Vinylchlorid in Gegenwart von kleineren Mengen von Emulgatoren, wie sie für die Emulsions-Polymerisation von Vinylchlorid verwendet werden, beispielsweise den Natriumsalzen von Alkylbenzolsulfonsäuren, Alkylschwefelsäuren oder sulfonierten Dialkylbernsteinsäureestern, durchzuführen, die so erhaltenen Polymerisate mit Emulsions-Polyvinylchlorid abzumischen und geringe Mengen eines nicht-ionischen Antistatikmittels zuzusetzen. Dadurch wird zwar die Benetzbarkeit verbessert, jedoch muß eine Verschlechterung der mechanischen Eigenschaften der gesinterten Platten in Kauf genommen werden.

Außerdem neigen derart hergestellte Separatorplatten wegen des vergleichsweise hohen Gehaltes an oberflächenaktiven Substanzen insbesondere des oder der Emulgatoren, in der elektrischen Zelle zum Schäumen.

Diese Nachteile werden durch ein weiteres bekanntes Verfahren beseitigt, bei dem die Suspensions-Polymerisation in Gegenwart von bestimmten freien Sulfonsäuren anstelle der für die Emulsions-Polymerisation bekannten Natriumsalze dieser Säuren und in Gegenwart von nicht-ionogenen Netzmitteln durchgeführt wird. Das erhaltene Produkt ergibt ohne Abmischung mit Emulsions-Polyvinylchlorid gesinterte Platten von guter Benetzbarkeit und guten mechanischen Eigenschaften, befriedigt aber auch nicht völlig, da die Thermostabilität herabgesetzt ist, die Fließeigenschaften des Pulvers sowie seine Dosierbarkeit auf den Platten-Sinter-Maschinen zu wünschen übrig läßt und bei längerer Verarbeitungszeit Korrosion an den Maschinenteilen auftritt.

Diese Nachteile werden durch eine Weiterentwicklung des im vorangegangenen Absatz beschriebenen Verfahrens weitgehend beseitigt, wobei die freien Sulfonsäuren, die durch die Polymerisation in der Formmasse enthalten sind, und die gegebenenfalls auch noch zusätzlich nachträglich der Formmasse beigemischt werden, durch bestimmte organische tertiäre Amine teilweise neutralisiert werden. In diesem Fall ist die Gegenwart von nicht-ionogenen Netzmitteln bei der Suspension-Polymerisation nicht unbedingt erforderlich. Aus den so erzeugten Formmassen können ohne Schwierigkeiten Separatoren für elektrische Zellen mit guten mechanischen und elektrischen Eigenschaften erzeugt werden. Es besteht jedoch in neuerer Zeit Interesse an Separatorplatten, die einen geringeren mittleren Porendurchmesser bei gleichem spezifischem elektrischem Durchgangswiderstand aufweisen, da hierdurch die Plattendicke verringert werden kann, wodurch eine erhebliche Materialersparnis bei der Plattenproduktion erreicht wird. Außerdem wird durch die geringere Porenstärke die Gefahr des »Durchwachsens« der Platten mit elektrisch leitenden Niederschlägen und damit die Bildung sogenannter »Kurzschlußbrücken« vermindert.

Es wurde nun eine Formmasse gefunden, die den neueren Anforderungen an ein sinterfähiges Polyvinylchlorid im oben beschriebenen Sinn voll gerecht wird. Diese sinterfähige, feinteilige Formmasse auf Basis Polyvinylchlorid mit einem K-Wert von 55 bis 75, einem Schüttgewicht von 450 bis 700 g/l, einer Weichmacher-Aufnahme von 5 bis 20 Gew.-%, einem Gehalt an Metallkationen von weniger als 0,01 Gew.-%, bezogen auf die Formmasse, einer mittleren Korngröße von 10 bis 50 µm und einer Kornverteilung von

99 bis 30 Gew.-% $<$33 µm
1 bis 60 Gew.-% von 33 bis 63 µm
0 bis 9 Gew.-% von $>$63 bis 125 µm und
0 bis 1 Gew.-% $>$125 µm besteht aus

99,8 bis 97 Gew.-%, bezogen auf die Formmasse, eines durch Suspensions-Polymerisation in wäßriger Phase hergestellten Pfropf-Copolymerisates, das seinerseits besteht aus

99,7 bis 85 Gew.-%, bezogen auf das Pfropf-Copolymerisat, polymerisierten Einheiten des Vinylchlorids,

0,09 bis 10,5 Gew.-%, bezogen auf das Pfropf-Copolymerisat, polymerisierten Einheiten des Ethylens und 0,09 bis 10,5 Gew.-%, bezogen auf das Pfropf-Copolymerisat, polymerisierten Einheiten des Vinylacetats mit der Maßgabe, daß die Summe der polymerisierten Einheiten des Ethylens und Vinylacetats 0,3 bis 15 Gew.-% beträgt; ferner aus

0,01 bis 0,5 Gew.-%, bezogen auf die Formmasse, mindestens einer der folgenden freien Sulfosäuren: Alkylsulfonsäuren mit 8 bis 16 C-Atomen und Alkylarylsulfonsäuren mit 3 bis 16 C-Atomen in der Alkylkette;

0,005 bis 0,5 Gew.-%, bezogen auf die Formmasse, von mindestens einem metallionenfreien, wasserlöslichen Netzmittel, das 12 bis 80 C-Atome und ein quartäres N-Atom enthält, welches mit einer Carbon- oder Sulfonsäuregruppe ein Salz bildet, sowie einem Rest der Suspendiermittel, Reste von Aktivatoren und anderen Polymerisationshilfsstoffen sowie gegebenenfalls geringe Mengen weiterer Zusatzstoffe enthält.

Liegt die Summe der polymerisierten Einheiten des Ethylens und Vinylacetats im Pfropf-Copolymerisat unterhalb 0,3 Gew.-%, bezogen auf das Pfropf-Copolymerisat, so werden Formmassen mit niedrigerem Schüttgewicht erhalten. Die daraus hergestellten Separatorplatten zeigen höheren mittleren Porendurchmesser, der im allgemeinen nicht günstiger liegt als er mit Formmassen gemäß dem Stand der Technik erreicht werden kann. Beträgt die Summe der polymerisierten Einheiten des Ethylens und Vinylacetats im Pfropf-Copolymerisat über 15 Gew.-%, so haben die Formmassen ein hohes Schüttgewicht, auch ist der mittlere Porendurchmesser der daraus hergestellten Separatorplatten günstig, jedoch steigt der spezifische elektrische Durchgangswiderstand der Platten an, was für deren Verwendungszweck unerwünscht ist. Außerdem sind Formmassen aus einem Pfropf-Copolymerisat, das mehr als 15 Gew.-% polymerisierte Einheiten des Ethylens und Vinylacetats enthält, auch vom wirtschaftlichen Standpunkt aus weniger interessant. Besonders gute Ergebnisse in bezug auf Eigenschaften und Wirtschaftlichkeit zeigen Formmassen, die ein Pfropf-Copolymerisat enthalten, das seinerseits besteht aus 99,5 bis 95 Gew.-%, bezogen auf das Pfropf-Copolymerisat, polymerisierten Einheiten des Vinylchlorids, 0,15 bis 3,5 Gew.-%, bezogen auf das Pfropf-Copolymerisat, polymerisierten Einheiten des Ethylens, und 0,15 bis 3,5 Gew.-%, bezogen auf das Pfropf-Copolymerisat, polymerisierten Einheiten des Vinylacetats mit der Maßgabe, daß die Summe der polymerisierten Einheiten des Ethylens und Vinylacetats 0,5 bis 5 Gew.-% beträgt.

Insbesondere enthält die Formmasse ein Pfropf-Copolymerisat das besteht aus: 99,5 bis 97 Gew.-%, bezogen auf das Pfropf-Copolymerisat, polymerisierten Einheiten des Vinylchlorids und 0,5 bis 3 Gew. -% von der Summe der polymerisierten Einheiten des Ethylens und Vinylacetats.

Der Gehalt der Formmasse an Metallkationen soll weniger als 0,01 Gew.-%, bezogen auf die Formmasse sein. Bei höherem Gehalt wird eine Verschlechterung der mechanischen Eigenschaften der aus der Formmasse hergestellten Sinterplatten festgestellt. Das gleiche trifft zu, wenn die Formmassen weniger als 0,01 der genannten freien Sulfonsäuren enthalten. Steigt der Gehalt der Formmassen an freien Sulfonsäuren über 0,5 Gew.-%, so sind die mechanischen Eigenschaften der gesinterten Platten zwar immer noch gut, jedoch treten bei der Verarbeitung der Formmassen in zunehmendem Maße Schwierigkeit wegen mangelnder Thermostabilität und Korrosion an den Verarbeitungsmaschinen auf. Außerdem verteuern höhere Gehalte an freien Sulfonsäuren die Formmasse. Bevorzugt werden Formmassen eingesetzt, die 0,05 bis 0,25 Gew.-%, bezogen auf die Formmasse, mindestens einer der weiter oben genannten freien Sulfonsäuren enthält.

Die Menge des Netzmittels in der Formmasse soll 0,005 bis 0,5 Gew.-%, bezogen auf die Formmasse, betragen. Unter 0,005 Gew.-% wird die für eine gute Separatorplatten-Qualität erforderliche kapillare Steighöhe nicht erreicht. Oberhalb 0,5 Gew.-% Netzmittel besteht in zunehmendem Maße die Gefahr des Schäumens, wenn die Separatorplatten in elektrischen Zellen eingesetzt werden, in denen sich beim Gebrauch oder während der Aufladung Gas entwickelt oder die während des Gebrauchs häufigen mechanischen Erschütterungen unterliegen. Gute Ergebnisse werden erhalten, wenn die Formmassen 0,01 bis 0,1 Gew.-% von mindestens einem der beschriebenen Netzmittel enthält.

Das verwendete Netzmittel soll praktisch keine, das heißt weniger als 0,5 Gew.-% Metallkationen enthalten. Es soll ausreichend, das heißt bei 20°C zu mehr als 2 Gew.-% in Wasser löslich sein, 12 bis 80 C-Atome und ein quartäres N-Atom enthalten, welches mit einer Carbon- oder Sulfonsäuregruppe ein Salz bildet. Unter einem »quartären N-Atom« ist ein N-Atom zu verstehen, das eine positive Ladung trägt und 4 Bindungen betätigt, wovon 1 bis 4 Bindungen mit C-Atomen und der Rest (3 bis 0) Bindungen mit H-Atomen sind. Vorzugsweise werden solche Netzmittel eingesetzt, in denen das quartäre N-Atom 3 oder 4 Bindungen mit C-Atomen besitzt. Dieses positiv geladene quartäre N-Atom bildet ein Salz mit einer Carbon- ($-COO^-$) oder Sulfon- ($-SO_3^-$)-Säuregruppe, deren negative Ladung die positive Ladung am N-Atom kompensiert. Die genannte Säuregruppe kann Bestandteil eines Moleküls sein, das das quaternäre Stickstoff-Atom nicht enthält oder auch im selben Molekül wie das quaternäre Stickstoff-Atom enthalten sein. Im letzteren Falle handelt es sich um ein sogenanntes »inneres Salz«, das üblicherweise auch als »Betain« beziehungsweise »Sulfobetain« bezeichnet wird.

Vorzugsweise werden als Netzmittel Verbindungen folgender Formeln eingesetzt:

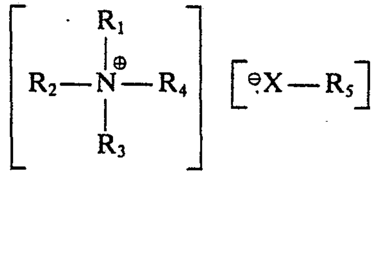

(I)

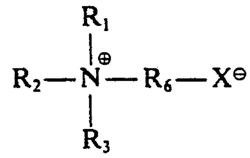

(II)

hierin bedeuten X eine $-COO$ oder eine $-SO_3$ -Gruppe

$R_1$ Wasserstoff oder eine Alkyl- oder eine Arylalkyl-Gruppe

$R_2$, $R_3$ und $R_4$ jedes für sich eine Alkyl- oder eine Aryl-alkyl-Gruppe, die gegebenenfalls in der Alkylkette durch Ether-Sauerstoffbrücken unterbrochen sein kann, insbesondere so, daß $-C_2H_4O$- oder $-C_3H_6O$-Gruppen in der Kette liegen.

$R_5$ einen Alkyl oder Alkylaryl-Rest und

$R_6$ einen Alkylen-Rest, wobei alle Reste $R_1$ bis $R_6$ und gegebenenfalls auch X zusammen 12 bis etwa 80 Kohlenstoffatome enthalten und mindestens einer der Reste $R_1$ bis $R_4$ sowie der Rest $R_5$ je mindestens 8 Kohlenstoffatome enthalten.

Besonders bevorzugt werden die inneren Salze gemäß der zweiten oben angegebenen Formel eingesetzt, die insgesamt 12 bis etwa 30 C-Atome enthalten. Es können auch Mischungen mehrerer der oben näher beschriebenen Netzmittel verwendet werden.

Der K-Wert des in der Formmasse enthaltenen Pfropf-Copolymerisates liegt im Bereich von 55 bis 75. Unterhalb eines K-Wertes von 55 und oberhalb eines K-Wertes von 75 sind die Formmassen schwerer zu verarbeiten und ergeben im allgemeinen gesinterte Platten von geringerer Qualität.

Das Schüttgewicht der Formmassen liegt im Bereich von 450 bis 700 g/l. Niedrigere Schüttgewichte führen im allgemeinen zu geringerem Produktionsausstoß sowie zu grobporigeren Platten mit weniger guten mechanischen Eigenschaften, höhere Schüttgewichte führen im allgemeinen zu Platten mit unerwünscht hohem elektrischem Durchgangswiderstand. Vorzugsweise werden Formmassen mit einem Schüttgewicht von 570 bis 679 g/l eingesetzt.

Die Weichmacheraufnahme der Formmasse beträgt 5 bis 20 Gew.-%, vorzugsweise 5 bis 12 Gew.-%.

Zur Herstellung von gesinterten Platten, die als Separatoren für elektrische Zellen Verwendung finden, muß die Formmasse eine mittlere Korngröße (mittleren Korndurchmesser) gemessen durch Sedimentationsanalyse von 10 bis 50 µm besitzen. Oberhalb einer mittleren Korngröße von 50 µm neigen die hergestellten Platten in zunehmendem Maße zur Grobporigkeit, unterhalb 10 µm mittlerer Korngröße ist es im allgemeinen zu schwierig, noch ausreichend durchlässige Platten zu erzeugen. Vorzugsweise werden Formmassen mit einer mittleren Korngröße von 20 bis 35 µm eingesetzt. Für die Bestimmung der mittleren Korngröße empfiehlt sich die Sedimentationsanalyse, da sie Korngrößenbereiche unter 33 µm genauer erfaßt und weniger anfällig gegen Störungen infolge elektrostatischer Aufladung der Polymerkörner ist.

Gegenstand der Erfindung ist ferner ein Verfahren zur Herstellung einer oben näher beschriebenen Formmasse durch Suspensions-Polymerisation von Vinylchlorid in wäßriger Phase in Gegenwart von öllöslichen, radikalisch zerfallenden Aktivatoren, Suspensions-Stabilisatoren, freien Emulgatorsäuren und gegebenenfalls weiteren Polymerisationshilfsstoffen, Abtrennen der Hauptmenge der wäßrigen Phase und Trocknung des Polymerisates, wobei gegebenenfalls nach der Abtrennung der wäßrigen Phase oder nach der Trocknung weitere Stoffe in feiner Verteilung dem Polymerisat zugesetzt werden, welches dadurch gekennzeichnet ist, daß in Gegenwart von 0,27 bis 17,5 Gew.-%, bezogen auf eingesetztes Vinylchlorid, eines Mischpolymerisates, das seinerseits besteht aus 30 bis 70 Gew.-%, bezogen auf das Mischpolymerisat, polymerisierten Einheiten des Ethylens und 70 bis 30 Gew.-%, bezogen auf das Mischpolymerisat, polymerisierten Einheiten des Vinylacetats, und ein mittleres Molgewicht, osmotisch gemessen, von 5000 bis etwa 200 000 aufweist sowie in Gegenwart von 0,005 bis 1,5 Gew.-%, bezogen auf eingesetztes Vinylchlorid, einer freien Alkylsulfonsäure mit 8 bis 16 C-Atomen oder einer freien Alkylarylsulfonsäure mit 3 bis 16 C-Atomen in der Alkylkette oder Mischungen aus mehreren dieser Säuren polymerisiert wird, im gebildeten Polymerisat nach Abtrennung der Hauptmenge der wäßrigen Phase der Sulfonsäuregehalt bestimmt wird und so viele der nachstehend näher beschriebenen Sulfonsäuren und Netzmittel dem Polymerisat in fein verteilter Form zugesetzt werden, daß das Polymerisat insgesamt 0,01 bis 0,5 Gew.-%, bezogen auf das getrocknete Polymerisat, der genannten Sulfonsäuren und 0,005 bis 0,5 Gew.-%, bezogen auf das getrocknete Polymerisat, der genannten Netzmittel enthält.

Die Polymerisation wird in druckfesten Apparaturen unter Bewegung der Polymerisationsflotte bei Temperaturen von 45 bis 70° C durchgeführt, wobei zweckmäßig das Ethylen-Vinylacetat-Mischpolymerisat vor Beginn der Polymerisation im flüssigen Vinylchlorid gelöst wird. Je 100 Teile eingesetztes monomeres Vinylchlorid werden zweckmäßig etwa 150 bis 300 Teile Wasser, 0,01 bis 0,2 Teile eines für die Suspensions-Polymerisation von Vinylchlorid bekannten öllöslichen radikalisch zerfallenden Aktivators oder eines Gemisches aus mehreren solcher Aktivatoren sowie 0,05 bis 3 Gewichtsteile eines

für die Suspensions-Polymerisation von Vinylchlorid üblichen bekannten Suspendiermittels, beispielsweise eines Celluloseethers oder teilverseiften Polyvinylacetats oder auch Gemischen mehrerer solcher Suspendiermittel eingesetzt. Bei der Polymerisation können ferner bekannte Kettenabbruchmittel und/oder Antioxidantien sowie weitere Polymerisations-Hilfsstoffe zugesetzt werden. Bei allen für die Polymerisation eingesetzten Stoffen beziehungsweise Hilfsstoffen ist darauf zu achten, daß sie keine oder, wenn technisch unvermeidlich, nur geringe Mengen Metallkationen enthalten.

Die Polymerisation wird im allgemeinen bis zu Umsätzen von 85%, bezogen auf eingesetztes Vinylchlorid, durchgeführt. Es werden zwar auch bei geringeren Umsatzgraden noch im Sinne der Erfindung gut brauchbare Formmassen erhalten, doch sind niedrigere Umsatzgrade weniger wirtschaftlich und bieten im allgemeinen keine sonstigen Vorteile.

Wenn trotzdem zu einem niedrigeren Umsatz als 85% polymerisiert werden soll ist zu berücksichtigen, daß die Gesamtmenge des eingesetzten Ethylenvinylacetat-Mischpolymerisats im erzeugten Pfropf-Copolymerisat vorhanden ist, jedoch beträchtliche Mengen des eingesetzten monomeren Vinylchlorids nicht umgesetzt wurden und bei Entspannung des Polymerisationsgefäßes gasförmig entweichen. Demzufolge muß in diesen Fällen eine je nach angestrebtem Umsatz geringere Menge des Ethylenvinylacetat-Mischpolymerisates sowie auch der freien Sulfonsäure eingesetzt werden.

Nach Beendigung der Polymerisation sowie Abkühlung und Entspannung des Polymerisationsgefäßes und Abtreiben restlicher störender Monomerer wird das gebildete Polymerisat von der wäßrigen Polymerisationsflotte nach üblichen Methoden, beispielsweise durch Filtrieren, Dekantieren oder Zentrifugieren abgetrennt und der Gehalt des Polymeren an freier Sulfosäure, beispielsweise durch acidimetrische Titration mit Benzyldimethyl-2,2-p-1,1-3,3-tetramethylbutylphenoxyethoxyethylammoniumchlorid bestimmt (siehe Zeitschrift »Fette, Seifen, Anstrichmittel« Band 73 (1971), Seite 683: Deutsche Einheitsmethoden zur Untersuchung von Fetten, Fettprodukten und verwandten Stoffen, 43. Mitteilung, Prof. Seber, »Analyse von organischen, grenzflächenaktiven Stoffen II«; siehe auch »Die Analytik der Tenside« von R. Wickbold, Firmenschrift der Hüls AG 1976, Seite 30 ff.).

Aufgrund des Analysenergebnisses wird nun entweder die gleiche freie Sulfonsäure, die auch bei der Polymerisation verwendet wurde oder eine andere freie Alkylsulfonsäure mit 8 bis 16 C-Atomen oder eine freie Alkylarylsulfonsäure mit 3 bis 16 C-Atomen in der Alkylkette dem Polymerisat zugesetzt in einer Menge, mit der der gewünschte Gesamtgehalt des Polymerisates an freier Sulfonsäure erreicht wird.

Sollte die analytisch bestimmte, von der Polymerisation herrührende Menge freier Sulfonsäure im Polymerisat zu hoch sein, so kann diese durch Zugabe von Verbindungen der Formeln

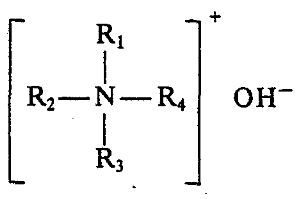

(III)

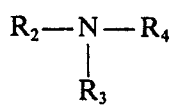

(IV)

worin $R_1$, $R_2$, $R_3$ und $R_4$ die gleiche Bedeutung haben wie weiter oben beschrieben, der überschüssige Teil der freien Sulfonsäuren in entsprechende Ammoniumsalze dieser Säuren umgesetzt werden, die als Netzmittel wirken und gegebenenfalls von der gesamt zuzusetzenden Netzmittelmenge abzuziehen sind. Werden zur Teilneutralisierung der freien Sulfonsäure tertiäre Amine gemäß Formel IV oder tertiäre Ammoniumhydroxide gemäß Formel III (worin $R_1$ ein Wasserstoffatom bedeutet) verwendet, so entstehen Netzmittel des Typs

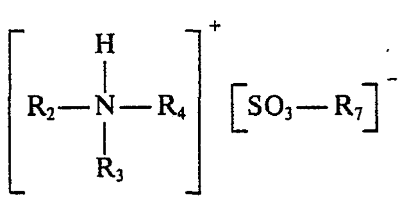

(V)

worin $R_2$, $R_3$ und $R_4$ die weiter oben beschriebene Bedeutung haben während $R_7$ einen Alkylrest mit 8 bis 16 C-Atomen oder einen Alkylarylrest mit 3 bis 16 C-Atomen in der Alkylkette darstellt.

Es werden nach Beendigung der Polymerisation und zweckmäßig auch nach Abscheidung der Hauptmenge der wäßrigen Flotte gegebenenfalls so viele der freien, oben näher beschriebenen Sulfonsäuren beziehungsweise so viele Verbindungen der Formeln III und/oder IV dem Polymerisat zugesetzt, daß dieses nach seiner Trocknung 0,01 bis 0,5 Gew.-%, bezogen auf das trockene Polymerisat, an freier Sulfonsäure enthält.

Außerdem wird dem Polymerisat nach der Polymerisation und zweckmäßig nach Abscheidung der Hauptmenge der wäßrigen Polymerisationsflotte mindestens ein metallionenfreies, wasserlösliches Netzmittel, das 12 bis etwa 80 C-Atome und ein quartiäres N-Atom enthält, welches mit einer Carbonsäure- oder Sulfonsäuregruppe ein Salz bildet, zugesetzt in einer Menge, daß das trockene Polymerisat 0,005 bis 0,5 Gew.-% des oder der genannten Netzmittel enthält. Wie bereits erwähnt, ist im Fall einer Teilneutralisation der freien Sulfonsäuren, wie oben beschrieben, der daraus gebildete Anteil von Ammoniumsalzen dieser Sulfonsäuren von der Zugabemenge des metallionenfreien, wasserlöslichen Netzmittels abzuziehen.

Vorzugsweise wird so gearbeitet, daß nach der Polymerisation keine Neutralisation freier Sulfonsäuren erforderlich ist und die Gesamtmenge des Netzmittels in Gestalt von Verbindungen der Formel II dem Polymerisat zugesetzt wird. Die Zugabe der genannten Verbindungen nach der Polymerisation kann entweder auf das wasserfeuchte Polymerisat oder auf das bereits trockene Polymerisat erfolgen. Zur besseren Verteilung können die zuzugebenden Verbindungen als Lösungen oder Aufschlämmungen beziehungsweise Dispersionen in Wasser angewendet werden, wobei zur Verbesserung der Löslichkeit beispielsweise aliphatische Alkohole mit 1 bis 4 C-Atomen beigegeben werden können. Diese Lösungen beziehungsweise Aufschlämmungen werden zweckmäßig in feiner Verteilung, beispielsweise versprüht oder zerstäubt, mit dem Polymerisat in Berührung gebracht. Während der Zugabe dieser Verbindungen wird das Polymerisat zweckmäßig bewegt, beispielsweise durch Rühren, Umschaufeln, Aufwirbeln, Zentrifugieren, Herabrieseln, Zerstäuben oder Mahlen.

Nach der Zugabe der Verbindungen wird das im Gemisch vorhandene Wasser und eventuell weitere leicht flüchtige Substanzen durch übliche Trocknungsmethoden entfernt. Damit ist im allgemeinen die sinterfähige, feinteilige Formmasse gebrauchsfertig. Es können ihr in besonderen Fällen geringe Mengen metallsalzfreier Stoffe, beispielsweise Antioxidantien, Thermostabilisatoren, Pigmente oder Mittel zur Verbesserung der antistatischen Eigenschaften, sofern erforderlich, beigemischt werden.

Soll die Polymerisation in Gegenwart größerer Mengen, beispielsweise über 0,2 Gew.-%, bezogen auf eingesetztes Vinylchlorid, einer freien Alkylsulfonsäure mit 8 bis 16 C-Atomen oder einer freien Alkylarylsulfonsäure mit 3 bis 16 C-Atomen in der Alkylkette der Mischungen aus mehreren dieser Säuren durchgeführt werden, so wird die Polymerisation zweckmäßig mit 0,005 bis 0,02 Gew.-%, bezogen auf eingesetztes Vinylchlorid der genannten freien Säuren, begonnen und die restliche Menge der freien Sulfosäure bis zur Gesamtmenge von maximal 1,5 Gew.-%, bezogen auf eingesetztes Vinylchlorid, nach Erreichen eines Umsatzes von etwa 30% in einer oder mehreren Portionen oder kontinuierlich der Polymerisationsflotte zugesetzt.

In einer besonders bevorzugten Ausführungsform des erfindungsgemäßen Verfahrens wird in Gegenwart von 0,01 bis 0,2 Gew.-%, bezogen auf eingesetztes Vinylchlorid, der vorstehend genannten Sulfosäuren polymerisiert. Gegenstand der Erfindung ist ferner die Verwendung der beschriebenen Formmassen zur Herstellung gesinterter Formkörper, insbesondere von Separatorplatten für elektrische Zellen.

Wie bereits eingangs erwähnt, zeichnen sich die erfindungsgemäßen Formmassen gegenüber denen gemäß Stand der Technik dadurch aus, daß sie Sinterplatten von geringerem mittlerem Porendurchmesser bei gleichem spezifischem Durchgangswiderstand, kapillarer Steighöhe, Reißfestigkeit und Reißdehnung ergeben, wodurch die Herstellung von dünneren Separatorplatten unter Materialersparnis möglich wird, die außerdem noch den Vorteil einer geringeren Tendenz zum »Durchwachsen« von leitfähigem Material zeigen. Darüber hinaus haben die erfindungsgemäßen Formmassen gegenüber bekannten Formmassen mit etwa vergleichbaren Eigenschaften ein höheres Schüttgewicht bei guter Rieselfähigkeit, wodurch die Verarbeitung erleichtert und der Ausstoß der Produktionsmaschinen verbessert wird.

Die nachfolgenden Beispiele und Vergleichsversuche sollen die Erfindung näher erläutern. Der Übersichtlichkeit wegen wurden die Versuchsergebnisse in einer Tabelle zusammengefaßt. Die verschiedenen Eigenschaften wurden nach folgenden Methoden bestimmt:

### K-Wert

Nach DIN 53 726.

### Schüttgewicht

Nach DIN 53 468

## Weichmacheraufnahme

Auf den perforierten Innenboden eines Zentrifugierbecher-Einsatzes (Laborzentrifuge nach DIN 58 970 E) wird ein mit Di-2-ethylhexylphthalat (DOP) getränktes Filtrierpapier dicht angelegt und der Einsatz mit Filterpapier gewogen (Gewicht $m_1$). Dann werden in diesen Einsatz 10,0 g Polymerisat-Probe eingewogen (Gewicht $m_2$), danach ca. 20 Gramm DOP zugegeben und etwa 5 Minuten stehengelassen. Sodann wird bei einer Zentrifugenbeschleunigung am Boden des perforierten Einsatzes von 25 000 bis 26 26 000 $m^2/s$ 60 Minuten lang abzentrifugiert. Der Einsatz wird äußerlich durch Abwischen mit Filtrierpapier gereinigt und samt Inhalt gewogen (Gewicht $m_3$). Die Weichmacheraufnahme, die u. a. ein Maß für die Porosität des Polymerisatkorns ist, errechnet sich (in Gew.-%) nach der Formel

$$\frac{m_3 - m_2}{m_2 - m_1} \cdot 100.$$

Die angegebenen Werte sind Mittelwerte aus 10 Einzelmessungen.

## Menge an freier Sulfosäure

Durch acidimetrische Titration mit Benzyldimethyl-2,2-p-1,1,3,3-tetramethylbutylphenoxy-ethoxyethylammoniumchlorid gemäß »Deutsche Einheitsmethoden zur Untersuchung von Fetten, Fettprodukten und verwandten Stoffen, 43. Mitteilung, Prof. Seber: »Analyse von organischen, grenzflächenaktiven Stoffen II« in der Zeitschrift: »Fette, Salze, Anstrichmittel« Band 73 (1971) Seite 683.

## Kornverteilung

Vermittels Luftstrahl-Siebanalyse nach DIN-Entwurf Nr. 53 734.

## Mittlerer Korndurchmesser

Durch Sedimentationsanalyse nach folgendem Verfahren: 1,82 Gramm Polyvinylchlorid werden in 600 ml einer 0,09%igen Natriumpyrophosphat-Lösung, die gut entgast wurde, dispergiert und mit einer Sartorius-Sedimentationswaage Typ 4600 bei einer Vorschubgeschwindigkeit des Registrierpapieres von 120 mm/h die Absitztendenz gemessen. Die Ausrechnung erfolgt nach der bekannten Stoke'schen Formel und ergibt den Teilchenradius. Dieser wird mit dem Körnungsnetz nach Rosin-Ramler und Sperling ausgewertet.

## Rieselfähigkeit

Nach J. Gäbler »Kunststoffe Hoechst« Sonderdruck Nr. 6172 »Prüfung von PVC-Pulvern« Seite 2, Punkt 4 (1977). Es wird nach der Methode gearbeitet, bei der 6 Trichter mit verschiedenen Auslauföffnungen mit Pulver gefüllt werden und die Nummer des Trichters angegeben wird, aus dem das Pulver gerade noch frei ausläuft. Je höher die Trichternummer, um so schlechter die Rieselfähigkeit.

## Bestimmungen an der gesinterten Platte

Herstellung der Sinterplatten: Es werden Separatorplatten für elektrische Zellen auf einer kontinuierlichen Band-Sinteranlage hergestellt. Dabei wird auf ein endloses Stahlband Polyvinylchlorid-Pulver in bestimmter Schichtdicke aufgetragen und zur Sinterung durch einen Ofen geleitet, dessen elektrische Heizung auf 325°C eingestellt ist. Durch Variation der Bandgeschwindigkeit kann die Verweilzeit in der Sinterzone und damit die Stärke der Sinterung des PVC-Pulvers geregelt werden. Die Bandgeschwindigkeit wird auf Werte zwischen 1,5 bis 1,9 m/min, vorzugsweise 1,7 m/min, eingestellt, so daß sich für die fertige Separatorplatte ein elektrischer Widerstand von 1,6 $m\Omega/dm^2$ ergibt. Die Separatorplatten haben eine Blattstärke von 0,2 mm und eine Rippenstärke von 0,7 mm.

## Reißdehnung und Reißfestigkeit

In Anlehnung an DIN-Vorschrift 53 455 — Zugversuch von Kunststoffen — wird die Reißdehnung (Dehnung bei Reißkraft) und die Reißfestigkeit bestimmt. Da keine genormten Probekörper zur Verfügung stehen, werden aus den gesinterten Platten Prüflinge der Größe 60 · 140 mm geschnitten. Die

Prüfung erfolgt auf einer Zugprüfmaschine entsprechend den allgemeinen Bedingungen für Zugprüfmaschinen (DIN 51 220, Klasse 1 sowie DIN 51 221). Nach 16stündiger Lagerung im Normklima (DIN 5001) bei 23 ± 2° C und 50 ± 5% relativer Luftfeuchtigkeit. Die Prüfgeschwindigkeit (Geschwindigkeit, mit der sich die beiden Einspannklemmen voneinander entfernen) beträgt 50 mm pro Minute ±10%. Der Kraft-Meßbereich liegt bei 10 N. Die Aufzeichnung von Kraft und Dehnung erfolgt über ein Schreibwerk auf einer Diagramm-Rolle. Der dehnungsproportionale Vorschub (Diagramm-Papier: Traverse) wird auf 5 zu 1 vergrößert eingestellt. Die Dehnung ist auf 100 mm freie Einspannlänge bezogen.

## Spezifischer elektrischer Widerstand

Die Ermittlung des elektrischen Widerstandes von Separatoren erfolgt über Messung des sogenannten Innenwiderstandes von Zellen, die in einer eigens dafür geschaffenen Prüfanordnung (Batterie-Zelle) gemessen wird. Die Differenz des Zellenwiderstandes mit und ohne Separator ergibt den negativen Widerstand des Trennkörpers. Durch Multiplikation mit dem Quotienten aus Plattenfläche durch Plattendicke wird der spezifische Durchgangswiderstand in $\Omega \cdot cm$ ermittelt.

Die Prüfzelle selbst besteht aus einer positiven und einer negativen Platte ($PbO_2$ und Pb), die im Abstand von 7 mm parallel zueinander angebracht sind. Als Elektroden nimmt man Platten solcher Größe und Bauart, wie sie beim Bleiakkumulator verwendet werden. Genau zwischen den Elektroden, in einer fensterförmigen Aussparung der Größe 100 · 100 mm befindet sich der Separator. Die Prüfzelle ist mit Schwefelsäure der Dichte 1,28 g pro $cm^3$ gefüllt und voll aufgeladen. Die Messung solcher niederohmigen Innenwiderstände wird mit einem direkt anzeigenden Mikro-Ohm-Meter (Typ EMT 326, Firma Elektromeßtechnik E. Franz KG, Lahr) vorgenommen, welches an den beiden Elektroden angeschlossen ist. Sie erfolgt mit Netz-Wechselstrom.

## Kapillare Steighöhe

Als Maß für die Benetzbarkeit der Separatorplatten und zur Charakterisierung der Porosität dient die Ermittlung der kapillaren Steighöhe. Dabei wird ein 1 cm breiter Streifen des Separators in eineProberöhre gestellt, die 1,5 cm hoch mit Wasser gefüllt ist. Als kapillare Steighöhe wird die Höhe der Benetzbarkeit in Millimeter nach einer Tauchzeit von 10 Minuten angegeben.

## Mittlerer Porendurchmesser und maximaler Porendurchmesser

Die Messung erfolgt analog der Veröffentlichung von Griebel, Martens und Behrens in »Plaste und Kautschuk« 19. Jahrgang (1972) Seite 285 und 286.

## Beispiele 1 bis 19 und Vergleichsversuche A bis C

Die Herstellung von sinterfähigen Formmassen nach dem erfindungsgemäßen Verfahren und nach den Vergleichsversuchen wurde wie folgt durchgeführt. Ein Gemisch aus Vinylchlorid, eines Ethylenvinylacetat-Copolymerisates mit einem osmotisch gemessenen mittleren Molekulargewicht von 10 bis 30 000, entsalztem Wasser, Suspendiermittel, Emulgator und Aktivator wie sie in nachfolgender Tabelle I nach Art und Menge ausgewiesen sind (Vergleichsversuch A wurde ohne Ethylenvinylacetat-Copolymerisat durchgeführt) werden in einem 400-l-Rührautoklaven aus $V_4A$-Edelstahl 4 Stunden bei 20° C gerührt, um das Ethylenvinylacetat-Copolymerisat vollständig im monomeren Vinylchlorid zu lösen. Anschließend wird das Gemisch unter weiterem Rühren auf die ebenfalls in der Tabelle angegebene Temperatur erwärmt und bei dieser Temperatur bis zu einem Druckabfall auf 0,4 MPa polymerisiert. Nun wird entspannt, die anfallende feinkörnige Polymerisat-Suspension nach bekanntem Verfahren von restlichem monomerem Vinylchlorid befreit und vermittels einer Dekanter-Zentrifuge das Polymerisat von der Hauptmenge der wäßrigen Polymerisationsflotte getrennt. Das so erhaltene Produkt erhält noch ca. 20 Gew.-%, bezogen auf das Produkt, Wasser. Vom wasserfeuchten Polymerisat wird eine Probe genommen und durch Titration, wie oben beschrieben, der Gehalt an freier Sulfonsäure ermittelt. Er ist in nachfolgender Tabelle II in Gewichtsprozent, bezogen auf getrocknetes Produkt, aufgeführt. Beim Vergleichsversuch A und den Beispielen 1 bis 18 werden nun die ebenfalls in der Tabelle II nach Art und Menge angegebenen Substanzen in Wasser gelöst durch Aufsprühen unter Bewegung des wasserfeuchten Produktes zugegeben. Die Mengenangaben in der Tabelle sind Gewichtsprozente, bezogen auf das getrocknete Produkt. Nach der Zugabe wird das Produkt mit Heißluft (Eingang 150° C, Ausgang 85° C) getrocknet.

An der so erhaltenen Formmasse werden die in der Tabelle II angegebenen Eigenschaften ermittelt.

Von einem Teil der Formmasse werden Sinterplatten hergestellt und an diesen die Eigenschaften bestimmt, die ebenfalls in der Tabelle II aufgeführt sind. Bestimmungsmethoden und Plattenherstellung sind weiter oben näher beschrieben.

In nachfolgender Tabelle I bedeuten:

| | | |
|---|---|---|
| GT | = | Gewichtsteile |
| Gew.-% VAc | = | Gewichtsprozent polymerisiertes Vinylacetat, bezogen auf das Ethylenvinylacetat-Copolymerisat (der Rest sind polymerisierte Ethylen-Einheiten) |
| MC 440 | = | Methylcellulose, deren 2 gew.-%ige wäßrige Lösung bei 20°C eine Viskosität von 440 mPa · s aufweist. |
| MC 50 | = | Methylcellulose, deren 2 gew.-%ige wäßrige Lösung bei 20°C eine Viskosität von 50 mPa · s aufweist |
| MHPC 50 | = | Methylhydroxypropylcellulose, deren 2 gew. -%ige wäßrige Lösung bei 20°C eine Viskosität von 50 mPa · s aufweist |
| DBS | = | n-Dodecylbenzolsulfonsäure |
| DBSNa | = | n-Dodecylbenzolsulfonsäure-Natriumsalz |
| AS | = | n-Alkansulfonsäure mit verschiedenen Kettenlängen von $C_{12}$ bis $C_{16}$ mit einem überwiegenden Gehalt an $C_{14}$ |
| ASNa | = | Natriumsalz der vorstehend beschriebenen n-Alkansulfonsäure |
| IPP | = | Diisopropylperoxydicarbonat |
| LPO | = | Dilauroylperoxid |
| TBPND | = | tert.-Butylperneodecanoat |

Tabelle I

| | Vergleichsversuch (V)/Beispiel (B) VA | VB | VC | B1 | B2 | B3 | B4 | B5 | B6 |
|---|---|---|---|---|---|---|---|---|---|
| Vinylchlorid, GT | 100 | 100 | 100 | 100 | 100 | 100 | 100 | 100 | 100 |
| Ethylenvinylacetat-Copolymerisat | | | | | | | | | |
| GT | — | 1 | 7 | 1 | 3 | 7 | 1 | 3 | 7 |
| Gew.-% VAc | — | 45 | 45 | 45 | 40 | 45 | 45 | 40 | 45 |
| Wasser, GT | 198 | 200 | 200 | 200 | 200 | 200 | 200 | 200 | 200 |
| Suspendiermittel | | | | | | | | | |
| GT | 0,5 | 0,2 | 0,8 | 0,2 | 0,35 | 0,8 | 0,2 | 0,3 | 0,8 |
| ART | MC 440 | MHPC 50 | MC 440 | MHPC 50 | MC 440 | MHPC 50 | MHPC 50 | MC 50 | MC 440 |
| Emulgator | | | | | | | | | |
| GT | 0,15 | 0,02 | 0,08 | 0,02 | 0,035 | 0,08 | 0,02 | 0,03 | 0,08 |
| ART | DBS | DBSNa | ASNa | DBS | DBS | DBS | AS | AS | AS |
| Aktivator | | | | | | | | | |
| GT | 0,02 | 0,02 | 0,02 | 0,02 | 0,03 | 0,03 | 0,04 | 0,05/0,02 | 0,02 |
| ART | IPP | IPP | IPP | IPP | IPP | IPP | IPP | LPO/TBPND | IPP |
| Polymerisations-Temperatur, °C | 60 | 60 | 61 | 60 | 57 | 57 | 55 | 66 | 61 |

In nachfolgender Tabelle II sind angegeben: Die Nachbehandlung der Polymerisate, die gemäß Tabelle I hergestellt wurden, die Eigenschaften der so erzeugten Formmassen und die Eigenschaften der aus diesen Formmassen erzeugten Sinterplatten. In der ersten senkrechten Spalte dieser Tabelle ist die laufende Versuchsbezeichnung angegeben, wobei für Vergleichsversuche große Buchstaben und für erfindungsgemäße Beispiele Nummern gewählt wurden. In der zweiten senkrechten Spalte zu Tabelle II ist angegeben, welches Polymerisat, hergestellt gemäß Tabelle I, verwendet wurde. In der dritten senkrechten Spalte wurde aus der Tabelle I übernommen, wie viele Gewichtsteile Ethylenvinylacetat-Copolymerisat je 100 Gewichtsteile Vinylchlorid bei der Polymerisation eingesetzt wurden. Die vierte senkrechte Spalte weist den titrimetrisch ermittelten Sulfonsäuregehalt des dekanterfeuchten Polymerisates in Gewichtsprozent, bezogen auf Trockensubstanz aus. In der fünften senkrechten Spalte ist angegeben, wieviel Sulfonsäure in Gewichtsprozent auf Trockensubstanz nachträglich zum dekanterfeuchten Polymerisat gegeben wurden. Die sechste senkrechte Spalte enthält Angaben über die Art der zugegebenen Sulfonsäure, wobei die gleichen Abkürzungen wie in Tabelle I verwendet wurden. Die siebte senkrechte Spalte zeigt wieviele Gewichtsprozente, bezogen auf Trockensubstanz eines Netzmittels zugegeben wurden. Im Vergleichsversuch A wurde entsprechend der DE-OS 26 46 595 ein tertiäres Amin zugesetzt, das mit der überschüssig vorhandenen Sulfonsäure ein als Netzmittel wirksames Salz bildet. Die achte senkrechte Spalte gibt an, welches Netzmittel zugesetzt wurde; hierin bedeuten:

DHEA = N-Dodecyl-N,N-dihydroxyethyl-amin
CDMB = N-Cocosalkyl-N,N-dimethyl-betain, wobei »Cocosalkyl« ein Alkylgruppengemisch folgender Kettenlängen-Verteilung (in %) bedeutet:
$C_8 = 7$; $C_{10} = 6$; $C_{12} = 51$; $C_{14} = 19$; $C_{16} = 8$; $C_{18} = 9$.
SDMB = N-Stearyl-N,N-dimethylbetain,
DDMB = N-n-Dodecyl-N,N-dimethyl-betain.

Tabelle II

| Vergleichs-versuch/ Beispiel Nr. | Poly-merisat (Tabelle I) | Polymerisat-Nachbehandlung GT EVAc/100 GT VC | Säure-gehalt (titr) Gew.-% | Säure-zugabe Gew.-% | Säureart | Netzmittel-zugabe Gew.-% | Netzmittel-art | Eigenschaften der Formmasse K-Wert | Schütt-gewicht g/l | Weich-macher-aufnah-me, % |
|---|---|---|---|---|---|---|---|---|---|---|
| A | VA | — | 0,08 | 0,08 | DBS | 0,05 | DHEA | 65,3 | 460 | 15 |
| B | VB | 1 | — | — | — | — | — | 65,0 | 630 | 7,1 |
| C | VC | 7 | — | — | — | — | — | 64,4 | 608 | 7,3 |
| 1 | B1 | 1 | 0,01 | 0,14 | DBS | 0,03 | CDMB | 65,2 | 612 | 8,9 |
| 2 | B4 | 1 | 0,01 | 0,14 | AS | 0,03 | CDMB | 69,5 | 634 | 7,6 |
| 3 | B1 | 1 | 0,01 | 0,14 | DBS | 0,03 | CDMB | 65,2 | 612 | 8,9 |
| 4 | B1 | 1 | 0,01 | 0,08 | DBS | 0,03 | CDMB | 65,2 | 612 | 8,9 |
| 5 | B1 | 1 | 0,01 | 0,14 | DBS | 0,08 | CDMB | 65,2 | 612 | 8,9 |
| 6 | B1 | 1 | 0,01 | 0,14 | DBS | 0,01 | SDMB | 65,2 | 612 | 8,9 |
| 7 | B1 | 1 | 0,01 | 0,14 | DBS | 0,03 | SDMB | 65,2 | 612 | 8,9 |
| 8 | B1 | 1 | 0,01 | 0,20 | DBS | 0,03 | SDMB | 65,2 | 612 | 8,9 |
| 9 | B1 | 1 | 0,01 | 0,14 | DBS | 0,05 | DDMB | 65,2 | 612 | 8,9 |
| 10 | B4 | 1 | 0,01 | 0,14 | AS | 0,03 | DDMB | 69,2 | 634 | 7,6 |
| 11 | B3 | 7 | 0,05 | 0,10 | DBS | 0,03 | CDMB | 67,1 | 640 | 7,2 |
| 12 | B6 | 7 | 0,05 | 0,10 | AS | 0,03 | CDMB | 64,6 | 652 | 6,9 |
| 13 | B3 | 7 | 0,05 | 0,04 | AS | 0,03 | CDMB | 67,1 | 640 | 7,2 |

Fortsetzung

| Vergleichsversuch/ Beispiel Nr. | Polymerisat (Tabelle I) | Polymerisat-Nachbehandlung GT EVAc/100 GT VC | Säuregehalt (titr) Gew.-% | Säurezugabe Gew.-% | Säureart | Netzmittelzugabe Gew.-% | Netzmittelart | Eigenschaften der Formmasse K-Wert | Schüttgewicht g/l | Weichmacheraufnahme, % |
|---|---|---|---|---|---|---|---|---|---|---|
| 14 | B3 | 7 | 0,05 | 0,07 | DBS | 0,03 | CDMB | 67,1 | 640 | 7,2 |
| 15 | B3 | 7 | 0,05 | 0,20 | DBS | 0,03 | CDMB | 67,1 | 640 | 7,2 |
| 16 | B3 | 7 | 0,05 | 0,09 | DBS | 0,03 | SDMB | 67,1 | 640 | 7,2 |
| 17 | B2 | 3 | 0,02 | 0,08 | DBS | 0,03 | CDMB | 67,3 | 614 | 8,0 |
| 18 | B5 | 3 | 0,02 | 0,15 | AS | 0,03 | DDMB | 67,1 | 640 | 7,2 |

Fortsetzung zu Tabelle II

| Vergleichs-versuch/ Beispiel Nr. | Eigenschaften der Formmasse Kornverteilung, % > 125 µm | > 63 µm < 125 µm | > 33 µm < 63 µm | < 33 µm | mittl. Korndurch-messer | Riesel-fähigkeit; Trichter Nr. | Eigenschaften der Sinterplatte Reiß-festigkeit Nm | Reiß-dehnung % | spez. Widerstand Ω cm | kapill. Steighöhe mm | mittl. Poren Ø µm | max. Poren Ø µm |
|---|---|---|---|---|---|---|---|---|---|---|---|---|
| A | 0 | 0,7 | 9,1 | 90,2 | 24 | 6 | 9,5 | 5,5 | 3,3 | 127 | 18 | 24 |
| B | 0 | 0,4 | 16,9 | 82,7 | 30 | 4 | < 0,1 | < 1 | nicht meßbar | nicht meßbar | — | — |
| C | 0 | 0,3 | 6,3 | 93,4 | 25 | 4 | < 0,1 | < 1 | nicht meßbar | nicht meßbar | — | — |
| 1 | 0 | 0,9 | 15,1 | 84,0 | 28 | 4 | 6,1 | 5,0 | 2,9 | 125 | 10,5 | 14,7 |
| 2 | 0,1 | 0,7 | 24,3 | 74,9 | 30 | 4 | 6,3 | 4,7 | 3,1 | 122 | 11,8 | 15,1 |
| 3 | 0 | 0,9 | 15,1 | 84,0 | 28 | 4 | 6,5 | 4,7 | 3,5 | 130 | 10,2 | 14,3 |
| 4 | 0 | 0,9 | 15,1 | 84,0 | 28 | 4 | 5,9 | 4,9 | 2,8 | 122 | 11,2 | 14,8 |
| 5 | 0 | 0,9 | 15,1 | 84,0 | 28 | 4 | 6,2 | 5,2 | 3,0 | 140 | 10,6 | 14,3 |
| 6 | 0 | 0,9 | 15,1 | 84,0 | 28 | 4 | 6,3 | 5,0 | 3,2 | 110 | 10,4 | 14,3 |
| 7 | 0 | 0,9 | 15,1 | 84,0 | 28 | 4 | 6,0 | 5,1 | 2,8 | 120 | 10,5 | 14,5 |
| 8 | 0 | 0,9 | 15,1 | 84,0 | 28 | 4 | 6,9 | 4,8 | 3,4 | 129 | 10,1 | 14,2 |
| 9 | 0 | 0,9 | 15,1 | 84,0 | 28 | 4 | 5,9 | 5,2 | 3,1 | 135 | 10,4 | 14,2 |
| 10 | 0,1 | 0,7 | 24,3 | 74,9 | 30 | 4 | 5,6 | 4,8 | 3,3 | 128 | 11,1 | 15,3 |
| 11 | 0 | 0,5 | 12,1 | 87,4 | 27 | 4 | 9,3 | 6,4 | 5,1 | 126 | 8,5 | 13,3 |
| 12 | 0 | 0,3 | 27,4 | 72,3 | 32 | 4 | 8,5 | 5,1 | 5,6 | 123 | 9,5 | 14,0 |

Fortsetzung

| Vergleichs-versuch/ Beispiel Nr. | Eigenschaften der Formmasse Kornverteilung, % > 125 µm | > 63 µm < 125 µm | > 33 µm < 63 µm | < 33 µm | mittl. Korndurch-messer | Riesel-fähigkeit; Trichter Nr. | Eigenschaften der Sinterplatte Reiß-festigkeit Nm | Reiß-dehnung % | spez. Widerstand Ω cm | kapill. Steighöhe mm | mittl. Poren Ø µm | max. Poren Ø µm |
|---|---|---|---|---|---|---|---|---|---|---|---|---|
| 13 | 0 | 0,5 | 12,1 | 87,4 | 27 | 4 | 7,1 | 5,3 | 4,8 | 115 | 9,1 | 13,9 |
| 14 | 0 | 0,5 | 12,1 | 87,4 | 27 | 4 | 8,3 | 5,9 | 5,0 | 120 | 8,9 | 13,9 |
| 15 | 0 | 0,5 | 12,1 | 87,4 | 27 | 4 | 9,5 | 5,2 | 5,8 | 133 | 8,5 | 13,5 |
| 16 | 0 | 0,5 | 12,1 | 87,4 | 27 | 4 | 8,8 | 6,2 | 5,0 | 124 | 8,8 | 13,6 |
| 17 | 0,1 | 1,1 | 30,1 | 68,7 | 32 | 4 | 7,5 | 5,9 | 4,1 | 122 | 9,8 | 13,9 |
| 18 | 0 | 0,5 | 12,1 | 87,4 | 27 | 4 | 7,3 | 5,2 | 4,5 | 126 | 10,0 | 14,2 |

**Patentansprüche**

1. Sinterfähige, feinteilige Formmasse auf Basis Polyvinylchlorid mit einem K-Wert von 55 bis 75, einem Schüttgewicht von 450 bis 700 g/l, einer Weichmacheraufnahme von 5 bis 20 Gew.-%, einem Gehalt an Metallkationen von weniger als 0,01 Gew.-%, bezogen auf die Formmasse, einer mittleren Korngröße von 10 bis 50 µm und einer Kornverteilung von

99 bis 30 Gew.-% < 33 µm,
1 bis 60 Gew.-% von 33 bis 63 µm,
0 bis 9 Gew.-% von > 63 bis 125 µm,
0 bis 1 Gew.-% > 125 µm
welche besteht aus

99,8 bis 97 Gew.-%, bezogen auf die Formmasse, eines durch Suspensions-Polymerisation in wäßriger Phase hergestellten Pfropf-Copolymerisats, das seinerseits besteht aus:

99,7 bis 85 Gew.-%, bezogen auf das Pfropf-Copolymerisat, polymerisierten Einheiten des Vinylchlorids,

0,09 bis 10,5 Gew.-%, bezogen auf das Pfropf-Copolymerisat, polymerisierten Einheiten des Ethylens und

0,09 bis 10,5 Gew.-%, bezogen auf das Pfropf-Copolymerisat, polymerisierten Einheiten des Vinylacetats mit der Maßgabe, daß die Summe der polymerisierten Einheiten des Ethylens und Vinylacetats 0,3 bis 15 Gew.-% beträgt;

0,01 bis 0,5 Gew.-%, bezogen auf die Formmasse, mindestens einer der folgenden freien Sulfonsäuren: Alkylsulfonsäuren mit 8 bis 16 C-Atomen und Alkylarylsulfonsäuren mit 3 bis 16 C-Atomen in der Alkylkette;

0,005 bis 0,5 Gew.-%, bezogen auf die Formmasse, von mindestens einem metallionenfreien, wasserlöslichen Netzmittel, das 12 bis 80 C-Atome und 1 quartäres N-Atom enthält, welches mit einer Carbon- oder Sulfonsäuregruppe ein Salz bildet;

Rest: Suspendiermittel, Reste von Aktivatoren und anderen Polymerisationshilfsstoffen sowie gegebenenfalls geringe Mengen metallsalzfreier weiterer Zusatzstoffe.

2. Formmasse nach Anspruch 1, dadurch gekennzeichnet, daß das Pfropf-Copolymerisat besteht aus

99,5 bis 95 Gew.-%, bezogen auf das Pfropf-Copolymerisat, polymerisierten Einheiten des Vinylchlorids,

0,15 bis 3,5 Gew.-%, bezogen auf das Pfropf-Copolymerisat, polymerisierten Einheiten des Ethylens und

0,15 bis 3,5 Gew.-%, bezogen auf das Pfropf-Copolymerisat, polymerisierten Einheiten des Vinylacetats,

mit der Maßgabe, daß die Summe der polymerisierten Einheiten des Ethylens und Vinylacetats 0,5 bis 5 Gew.-% beträgt.

3. Formmasse nach Ansprüchen 1 und 2, dadurch gekennzeichnet, daß sie 0,05 bis 0,25 Gew.-%, bezogen auf die Formmasse, mindestens eine der in Anspruch 1 genannten freien Sulfonsäuren enthält.

4. Formmasse nach Ansprüchen 1 bis 3, dadurch gekennzeichnet, daß sie 0,01 bis 0,1 Gew.-%, bezogen auf die Formmasse, von mindestens einem in Anspruch 1 genannten Netzmittel enthält.

5. Formmasse nach Ansprüchen 1 bis 4, gekennzeichnet, durch ein Schüttgewicht von 570 bis 670 g/l.

6. Formmasse nach Ansprüchen 1 bis 5, gekennzeichnet durch eine mittlere Korngröße von 20 bis 25 µm.

7. Verfahren zur Herstellung einer Formmasse gemäß Anspruch 1, durch Suspensions-Polymerisation von Vinylchlorid in wäßriger Phase in Gegenwart von öllöslichen, radikalisch zerfallenden Aktivatoren, Suspensionsstabilisatoren, freien Emulgatorsäuren und gegebenenfalls weiteren Polymerisations-Hilfsstoffen, Abtrennen der Hauptmenge der wäßrigen Phase und Trocknung des Polymerisates, wobei gegebenenfalls nach der Abtrennung der wäßrigen Phase oder nach der Trocknung weitere Stoffe in feiner Verteilung dem Polymerisat zugesetzt werden, dadurch gekennzeichnet, daß in Gegenwart von

0,27 bis 17,5 Gew.-%, bezogen auf eingesetzte Vinylchlorid, eines Mischpolymerisates, das seinerseits besteht aus:

30 bis 70 Gew.-%, bezogen auf das Mischpolymerisat, polymerisierten Einheiten des Ethylens und

70 bis 30 Gew.-%, bezogen auf das Mischpolymerisat, polymerisierten Einheiten des Vinylacetats, welches ferner ein mittleres Molekulargewicht, osmotisch gemessen, von 5000 bis

200 000 aufweist,
sowie von
0,005 bis 1,5 Gew.-%, bezogen auf eingesetztes Vinylchlorid, einer freien Alkylsulfonsäure mit 8 bis 16 C-Atomen oder einer freien Alkylarylsulfonsäure mit 3 bis 16 C-Atomen in der Alkylkette, oder Mischungen aus mehreren dieser Säuren polymerisiert wird, im gebildeten Polymerisat, nach Abtrennung der Hauptmenge der wäßrigen Phase, der Sulfonsäure-Gehalt bestimmt wird und so viele der in Anspruch 1 genannten Sulfonsäuren und Netzmittel dem Polymerisat in fein verteilter Form zugesetzt werden, daß das Polymerisat insgesamt
0,01 bis 0,5 Gew.-%, bezogen auf das getrocknete Polymerisat, der genannten Sulfonsäuren und
0,005 bis 0,5 Gew.-%, bezogen auf das getrocknete Polymerisat, der genannten Netzmittel enthält.

8. Verfahren nach Anspruch 7, dadurch gekennzeichnet, daß in Gegenwart von 0,01 bis 0,2 Gew.-%, bezogen auf eingesetztes Vinylchlorid, der in Anspruch 7 genannten Sulfonsäuren polymerisiert wird.
9. Verwendung der Formmassen nach Ansprüchen 1 bis 6 zur Herstellung gesinterter Formkörper, insbesondere Separatorplatten für elektrische Zellen.

## Claims

1. Sinterable, finely divided molding composition, based on polyvinyl chloride having a K-value of 55 to 75, a bulk density of 450 to 700 g/l, a plasticizer absorption of 5 to 20% by weight, a content of metal cations of less that 0.01% by weight, relative to the molding composition, an average particle size of 10 to 50 μm and a particle size distribution of 99 to 30% by weight <33 μm, 1 to 60% by weight from 33 to 63 μm, 0 to 9% by weight from >63 to 125 μm and 0 to 1% by weight >125 μm, which consists of:

99.8 to 97% by weight, relative to the molding composition, of a graft copolymer which has been prepared by suspension polymerization in an aqueous phase and which is in turn composed of 99.7 to 85% by weight, relative to the graft copolymer, of polymerized units of vinyl chloride, 0.09 to 10.5% by weight, relative to the graft copolymer, of polymerized units of ethylene and 0.09 to 10.5% by weight, relative to the graft copolymer, of polymerized units of vinyl acetate, with the proviso that the total of the polymerized units of ethylene and vinyl acetate is 0.3 to 15% by weight;
0.01 to 0.5% by weight, relative to the molding composition, of at least one of the following free sulfonic acids: alkylsulfonic acids having 8 to 16 C atoms and alkylarylsulfonic acids having 3 to 16 C atoms in the alkyl chain; and
0.005 to 0.5% by weight, relative to the molding composition, of at least one water-soluble wetting agent which is free from metal ions and contains 12 to 80 C atoms and 1 quaternary N atom which forms a salt with a carboxylic or sulfonic acid group;
the remainder being: suspending agents, residues of activators and other polymerization auxiliaries and if appropriate, small quantities of further additives.

2. Molding composition according to claim 1, characterized in that the graft copolymer consists of 99.5 to 95% by weight, relative to the graft copolymer, of polymerized units of vinyl chloride, 0.15 to 3.5% by weight, relative to the graft copolymer, of polymerized units of ethylene and 0.15 to 3.5% by weight, relative to the graft copolymer, of polymerized units of vinyl acetate, with the proviso that the total of the polymerized units of ethylene and vinyl acetate is 0.5 to 5% by weight.
3. Molding composition according to claims 1 and 2, characterized in that it contains 0.05 to 0.25% by weight, relative to the molding composition, of at least one of the free sulfonic acids mentioned in claim 1.
4. Molding composition according to claims 1 to 3, characterized in that it contains 0.01 to 0.1% by weight, relative to the molding composition, of at least one wetting agent mentioned in claim 1.
5. Molding composition according to claims 1 to 4, characterized in that it has a bulk density of 570 to 670 g/l.
6. Molding composition according to claims 1 to 5, characterized in that it has an average particle size from 20 to 35 μm.
7. Process for the production of a molding composition according to claim 1, by suspension polymerization of vinyl chloride in an aqueous phase in the presence of oilsoluble activators which decompose to form free radicals, suspension stabilizers, free emulsifier acids, and, if appropriate further polymerization auxiliaries removing the bulk of the aqueous phase and drying the polymer, further substances in a state of fine division are optionally added to the polymer, after removing the aqueous phase or after drying, characterized by carrying out polymerization in the presence of 0.27 to 17.5 by weight, relative to vinyl chloride employed, of a copolymer which is, in turn, composed of 30 to 70% by weight, relative to the copolymer, of polymerized units of ethylene and 70 to 30% by weight, relative to the copolymer, of polymerized units of vinyl acetate, and which also has an average molecular weight, determined by osmotic methods, of 5000 to 200 000, and also in the presence of 0.005 to 1.5% by weight, relative to vinyl chloride employed, of a free alkylsulfonic acid having 8 to 16 C atoms or a free

alkylarylsulfonic acid having 3 to 16 C atoms in the alkyl chain, or mixtures of several of these acids, the content of sulfonic acid in the polymer formed being determined after the removal of the bulk of the aqueous phase and sufficient of the sulfonic acids and wetting agents mentioned in claim 1 being added to the polymer in a finely divided form for the polymer to contain a total of 0.01 to 0.5% by weight, relative to the dried polymer, of the said sulfonic acids and 0.005 to 0.5% by weight, relative to the dried polymer, of the said wetting agents.

8. Process according to claim 7, characterized in that the polymerization is carried out in the presence of 0.01 to 0.2% by weight, relative to vinyl chloride employed, of the sulfonic acids mentioned in claim 7.

9. Use of the molding compositions according to claims 1 to 6 for the production of sintered moldings particularly separator plates for electrical cells.

**Revendications**

1. Matière à mouler en fines particules, frittable, à base d'un poly-(chlorure de vinyle) ayant une valeur K de 55 à 75, une masse volumique akparente de 450 à 700 g/litre, un pouvoir d'absorption des plastifiants de 5 à 20% en poids, une teneur en cations métalliques inférieure à 0,01% en poids, par rapport à la matière à mouler, une granularité moyenne de 10 à 50 μm et une distribution granulométrique entrant dans le cadre suivant:

de 99 à 30% en poids: <33 μm,
de 1 à 60% en poids: de 33 à 63 μm,
de 0 à 9% en poids: de plus de 63 à 125 μm et
de 0 à 1% en poids: >125 μm,
matière à mouler qui est constituée:

de 99,8 à 97% en poids, par rapport à la matière à mouler, d'un copolymère greffé qui a été préparé par polymérisation en suspension en phase aqueuse et qui est lui-même constitué:

de 99,7 à 85% en poids, par rapport au copolymère greffé, de motifs de chlorure de vinyle incorporés par polymérisation,
de 0,09 à 10,5% en poids, par rapport au copolymère greffé, de motifs d'éthylène incorporés par polymérisation et
de 0,09 à 10,5% en poids, par rapport au copolymère greffé, de motifs d'acétate de vinyle incorporés par polymérisation,
la somme des motifs d'éthylène et d'acétate de vinyle incorporés par polymérisation représentant de 0,3 à 15% en poids,

de 0,01 à 0,5% en poids, par rapport à la matière à mouler, d'au moins un acide sulfonique libre pris dans l'ensemble constitué par les acides alcane-sulfoniques contenant de 8 à 16 atomes de carbone et les acides alkyl-arène-sulfoniques dont la partie alkyle contient de 3 à 16 atomes de carbone,
de 0,005 à 0,5% en poids, par rapport à la matière à mouler, d'au moins un mouillant hydrosoluble dépourvu d'ion métallique et renfermant de 12 à 80 atomes de carbone ainsi qu'un atome d'azote quaternaire formant un sel avec un acide carboxylique ou sulfonique, et qui contient, en complément, des restes des agents de suspension, des restes d'activants et d'autres adjuvants de polymérisation ainsi que, le cas échéant, de petites quantités d'additifs supplémentaires dépourvus de sels métalliques.

2. Matière à mouler selon la revendication 1, caractérisée en ce que le copolymère greffé est constitué:

de 99,5 à 95% en poids, par rapport au copolymère greffé, de motifs polymérisés du chlorure de vinyle,
de 0,15 à 3,5% en poids, par rapport au copolymère greffé, de motifs polymérisés de l'éthylène et
de 0,15 à 3,5% en poids, par rapport au copolymère greffé, de motifs polymérisés de l'acétate de vinyle,

avec la condition que la somme des motifs polymérisés de l'éthylene état e de vinyle représente de 0,5 à 5% en poids.

3. Matière à mouler selon l'une des revendications 1 et 2, caractérisée en ce qu'elle contient de 0,05 à 0,25% en poids, par rapport à la matière à mouler, d'au moins un des acides sulfoniques libres qui ont été cités à la revendication 1.

4. Matière à mouler selon l'une quelconque des revendications 1 à 3, caractérisée en ce qu'elle contient de 0,01 à 0,1% en poids, par rapport à la matière à mouler, d'au moins un mouillant tel que défini à la revendication 1.

5. Matière à mouler selon l'une quelconque des revendications 1 à 4, caractérisée en ce qu'elle a une masse volumique apparente de 570 à 670 g/litre.

6. Matière à mouler selon l'une quelconque des revendications 1 à 5, caractérisée en ce qu'elle a une granularité moyenne de 20 à 35 µm.

7. Procédé de préparation d'une matière à mouler selon la revendication 1, par polymérisation en suspension du chlorure de vinyle en phase aqueuse, en présence d'activeurs oléosolubles capables de se décomposer en libérant des radicaux, de stabilisants de suspension, d'acides libres émulsionnants et éventuellement d'autres adjuvants de polymérisation, séparation de la majeure partie de la phase aqueuse et séchage du polymère, d'autres substances, finement divisées, étant éventuellement ajoutées au polymère après la séparation de la phase aqueuse ou après le séchage, procédé caractérisé en ce qu'on polymérise en présence:

de 0,27 à 17,5% en poids, par rapport au chlorure de vinyle mis en jeu, d'un copolymère qui est lui-même constitué:

de 30 à 70% en poids, par rapport au copolymère, de motifs polymérisés de l'éthylene et

de 70 à 30% en poids, par rapport au copolymère, de motifs polymérisés de l'acétate de vinyle,

copolymère qui a en outre une masse moléculaire moyenne, déterminée par osmométrie, de 5000 à 200 000,

et également en présence:

de 0,005 à 1,5% en poids, par rapport au chlorure de vinyle mis en jeu, d'un acide alcane-sulfonique libre contenant de 8 à 16 atomes de carbone ou d'un acide alkyl-arène-sulfonique libre contenant de 3 à 16 atomes de carbone dans sa partie alkylique, ou de mélanges de plusieurs de ces acides,

on détermine la teneur en acide sulfonique du polymère formé, cela après avoir séparé la majeure partie de la phase aqueuse, et on ajoute au polymère les acides sulfoniques et les mouillants mentionnés à la revendication 1, sous une forme finement divisée, en des quantités telles que le polymère contienne au total:

de 0,01 à 0,5% en poids, par rapport au polymere séché, des acides sulfoniques cités et

de 0,005 qa 0,5% en poids, par rapport au polymère séché, des mouillants mentionnés.

8. Procédé selon la revendication 7, caractérisé en ce qu'on opère en présence de 0,01 à 0, 2% en poids, par rapport au chlorure de vinyle mis en jeu, des acides sulfoniques mentionnés qa la revendication 7.

9. Application des matières à mouler selon l'une quelconque des revendications 1 à 6 pour la fabrication d'objets moulés frittés, plus spécialement de plaques de séparation destinées à des cellules électriques.